# FASCICULE DE BREVET EUROPEEN

(11) **EP 3 298 304 B1**
(45) Date de publication et mention de la délivrance du brevet: **16.09.2020**
(21) Numéro de dépôt: 16729026.1
(22) Date de dépôt: 17.05.2016
(51) Int. Cl.: F16H 57/029, A01D 34/68, A01D 34/69, A01D 69/06, F16H 57/031

(54) **TRANSMISSION, AINSI QU'UN ENGIN ROULANT EQUIPE D'UNE TELLE TRANSMISSION**
GETRIEBE UND MIT SOLCH EINEM GETRIEBE AUSGESTATTETES, FAHRENDES FAHRZEUG
TRANSMISSION, AND RUNNING VEHICLE EQUIPPED WITH SUCH A TRANSMISSION

(30) Priorité: 19.05.2015 FR 1554465; 19.05.2015 FR 1554467; 19.05.2015 FR 1554470; 19.05.2015 FR 1554471; 19.05.2015 FR 1554463
(43) Date de publication de la demande: 28.03.2018
(73) Titulaire: France Reducteurs, 85500 Les Herbiers (FR)
(72) Inventeur: TEILLET, Emmanuel, 85700 Les Chatelliers Chateaumur (FR)
(74) Mandataire: Godineau, Valérie
(86) Numéro de dépôt international: PCT/FR2016/051154
(87) Numéro de publication internationale: WO 2016/185127

(56) Documents cités:
- DE-B- 1 157 923
- FR-A1- 2 795 145
- FR-A1- 2 885 656
- FR-A1- 2 940 773
- FR-A1- 3 004 771

## Description

L'invention concerne une transmission, ainsi qu'un engin roulant équipé d'une telle transmission.

Elle concerne plus particulièrement une transmission comprenant un arbre réalisé d'un seul tenant ou en au moins deux sections d'arbre coaxiales, une roue dite dentée motrice montée libre à rotation sur ledit arbre, et, disposé entre l'arbre ou chacune des sections d'arbre et la roue motrice, un mécanisme d'embrayage, le ou chaque mécanisme d'embrayage étant activé par l'entraînement en rotation de la roue motrice suivant un premier sens d'entraînement en rotation dit marche avant, et désactivable par l'entraînement en rotation en marche avant de l'arbre ou de la section d'arbre avec lequel il coopère, lorsque la vitesse de rotation de l'arbre ou de ladite section d'arbre est supérieure à la vitesse de rotation de la roue motrice, l'arbre d'entraînement de roues ou chaque section d'arbre d'entraînement de roue étant, à l'état désactivé du mécanisme d'embrayage correspondant, libre de tourner dans l'un quelconque de ses sens de rotation, le ou chaque mécanisme d'embrayage comprenant un plateau d'embrayage monté libre à rotation sur l'arbre ou la section d'arbre associée et auquel le mouvement de rotation de la roue motrice est apte à être transmis, une pièce portée par, et solidaire en rotation de l'arbre ou de la section d'arbre associée et un frein dudit plateau d'embrayage à action permanente sur la vitesse angulaire dudit plateau.

Une telle transmission est connue comme l'illustre le brevet FR 2.885.656.

Une telle transmission intègre un embrayage dit automatique qui ne nécessite pas, pour son fonctionnement, un organe de commande dédié tel qu'une fourchette, comme cela est le cas dans des embrayages traditionnels.

Dans une telle transmission, lors de l'entraînement en rotation dans un sens dit en marche avant de la roue dentée, le mécanisme d'embrayage est désactivé lorsque la vitesse de rotation de l'arbre, qui est généralement l'arbre d'entraînement de roue de l'engin, est supérieure à la vitesse de rotation de la roue motrice. Cette caractéristique permet généralement, en raison de l'inertie de l'engin, une désactivation automatique du ou des mécanismes d'embrayage, lors de l'arrêt de l'engin. En effet, lorsque l'engin est arrêté, la roue dentée motrice arrête de tourner et l'arbre ou les sections d'arbre d'entraînement de roue de l'engin entraînés par l'inertie de l'engin, assurent la désactivation du mécanisme d'embrayage, permettant ensuite un déplacement aisé au sol en marche avant ou en marche arrière, de l'engin.

Pour un bon fonctionnement d'un embrayage automatique, il est nécessaire de freiner de manière permanente le plateau d'embrayage. Toutefois, jusqu'à présent, le frein est de conception complexe, et de pose difficile.

Il existe, par ailleurs, des transmissions dont l'arbre de roue est freiné comme l'illustre le brevet FR 2.795.145.

Un but de l'invention est de proposer une transmission dont la conception du frein du plateau d'embrayage est simplifiée et la pose dudit frein facilitée.

A cet effet, l'invention a pour objet une transmission comprenant les caractéristiques de la revendication 1.

Grâce à la possibilité d'enfiler le frein sur l'arbre, ce dernier se monte comme le ou les mécanismes d'embrayage, de sorte que le temps supplémentaire nécessaire à un opérateur pour le montage du frein se résume simplement au temps nécessaire à ce dernier pour enfiler une pièce supplémentaire sur l'arbre.

De préférence, le frein du ou d'au moins l'un des plateaux d'embrayage est un organe de freinage par friction actif par contact d'appui permanent sur le bord périphérique externe, encore appelé chant ou tranche, dudit plateau d'embrayage.

De préférence, le frein du ou d'au moins l'un des plateaux d'embrayage est monté fixe en rotation autour de l'arbre ou de la section d'arbre d'entraînement de roue associé(e) audit plateau d'embrayage.

De préférence, lesdites lames ressort du frein de plateau d'embrayage sont montées de manière fixe en rotation autour de l'arbre ou de la section d'arbre portant ledit plateau d'embrayage et, de préférence, de manière diamétralement opposée par rapport à l'arbre ou à la section d'arbre portant ledit plateau d'embrayage.

De préférence, l'arbre ou les sections d'arbre, la roue motrice et chaque mécanisme d'embrayage sont logés au moins partiellement à l'intérieur d'un boîtier et les lames ressort sont, pour leur montage fixe à rotation, recourbées à leur extrémité libre pour former une languette apte à coulisser dans une rainure axiale du boîtier.

De préférence, le frein du ou d'au moins l'un des plateaux d'embrayage est formé d'un flan plié et découpé.

De préférence, ledit plateau d'embrayage, disposé entre roue motrice et pièce, est monté mobile axialement dans le sens d'un rapprochement et d'un écartement de la roue motrice et est disposé, à l'état activé du mécanisme d'embrayage, en prise avec la pièce portée par, et solidaire en rotation de l'arbre ou de la section d'arbre et, à l'état désactivé, désaccouplé de la pièce portée par, et solidaire en rotation de l'arbre ou de la section d'arbre.

De préférence, le plateau d'embrayage et la pièce du ou d'au moins l'un des mécanismes d'embrayage et la roue motrice sont munis, sur au moins l'une de leurs faces, de rampes, les rampes d'une face du plateau coopérant, lors de la phase d'activation, avec les rampes d'une face de la roue motrice pour un déplacement axial du plateau d'embrayage dans une première direction d'écartement de la roue motrice et de solidarisation du plateau d'embrayage avec la pièce portée par, et solidaire en rotation de, l'arbre ou de la section d'arbre, les rampes de l'autre face du plateau coopérant, lors de la phase de désactivation, avec des rampes d'une face de la pièce portée par, et solidaire en rotation de, l'arbre ou de la section d'arbre pour provoquer par déplacement axial de sens opposé dudit plateau d'embrayage, la mise en roue libre de l'arbre ou de la section d'arbre.

De préférence, au moins certaines des rampes de la roue motrice et du plateau d'embrayage sont formées par l'un des flancs de crénelures ou dents en saillie desdites faces.

De préférence, la transmission comprend des moyens menants moteurs de la roue motrice, lesdits moyens menants moteurs comprenant un moteur équipé d'un arbre moteur, ledit arbre moteur s'étendant parallèlement à l'axe longitudinal de l'arbre ou de chacune des sections d'arbre.

De préférence, les moyens menants moteurs comprennent en outre un mécanisme d'engrenage disposé entre l'arbre moteur et la roue motrice, ce mécanisme d'engrenage, avec lequel la roue motrice est en prise permanente par engrènement, comprenant une pluralité de pignons montés chacun à rotation autour d'un axe s'étendant parallèlement à l'arbre moteur et à l'arbre ou à chacune des sections d'arbre.

De préférence, l'arbre, la roue motrice et chaque mécanisme d'embrayage sont logés au moins partiellement à l'intérieur d'un boîtier, et les moyens menants moteurs d'entraînement en rotation de la roue dentée comprennent, disposé entre le mécanisme d'engrenage et l'arbre moteur, un train épicycloïdal comprenant un porte-satellites auquel le mouvement de rotation de l'arbre moteur est apte à être transmis, le porte-satellites du train épicycloïdal étant monté solidaire en rotation d'un pignon du mécanisme d'engrenage, ce pignon et le porte-satellites formant un ensemble rotatif porté, et guidé en rotation à l'intérieur du boîtier, par un roulement mécanique, ce roulement comprenant une bague intérieure à l'intérieur de laquelle ledit ensemble est logé au moins partiellement, et une bague extérieure entourant la bague intérieure, lesdites bagues intérieure et extérieure étant des bagues coaxiales montées libres en rotation l'une par rapport à l'autre, la bague extérieure étant montée fixe à l'intérieur du boîtier.

De préférence, le boîtier présente au moins deux éléments de boîtier assemblables par un plan de joint et l'arbre d'entraînement de roues ou chacune des sections d'arbre d'entraînement de roue s'étend transversalement, de préférence orthogonalement, audit plan de joint à l'état assemblé des deux éléments de boîtier.

De préférence, ledit boîtier, qui présente au moins deux éléments de boîtier assemblables par un plan de joint et délimitant à l'état assemblé une cavité, comprend des moyens d'étanchéité de ladite cavité s'étendant au niveau du plan de joint en entourant ladite cavité et des moyens de maintien des éléments de boîtier en applique l'un contre l'autre par encliquetage.

L'invention a encore pour objet un engin automoteur roulant à conducteur, de préférence marchant, tel que tondeuse à gazon, caractérisé en ce qu'il est équipé d'une transmission du type précité et en ce que l'arbre de la transmission est un arbre d'entraînement des roues dudit engin.

L'invention sera bien comprise à la lecture de la description suivante d'exemples de réalisation, en référence aux dessins annexés dans lesquels :
- La figure 1 représente une vue d'ensemble d'un engin roulant équipé d'une transmission conforme à l'invention.

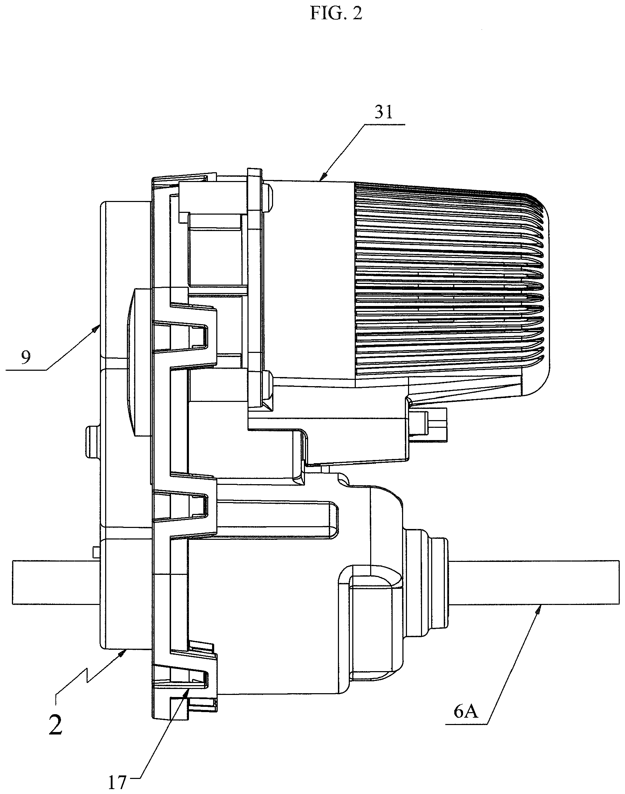

- La figure 2 représente une vue en perspective d'un boîtier de transmission conforme à l'invention.
- La figure 3A représente une vue en position éclatée des éléments la constituant d'une transmission conforme à l'invention.
- La figure 3B représente une vue partielle en position éclatée des éléments portés par l'arbre d'entraînement des roues de l'engin.
- La figure 4 représente une vue en coupe d'une transmission conforme à l'invention, avec l'arbre réalisé en deux sections d'arbre.
- La figure 5 représente une vue en coupe d'une transmission conforme à l'invention, avec l'arbre réalisé d'un seul tenant.
- La figure 6 représente une vue en perspective des éléments de boîtier à l'état non assemblé.
- Les figures 7 et 8 représentent chacune une vue de détail des moyens de maintien par encliquetage.
- La figure 9 représente une vue de détail d'un mode de réalisation des moyens de liaison par collage.
- La figure 10 représente une vue de détail d'un autre mode de réalisation des moyens de liaison par collage.

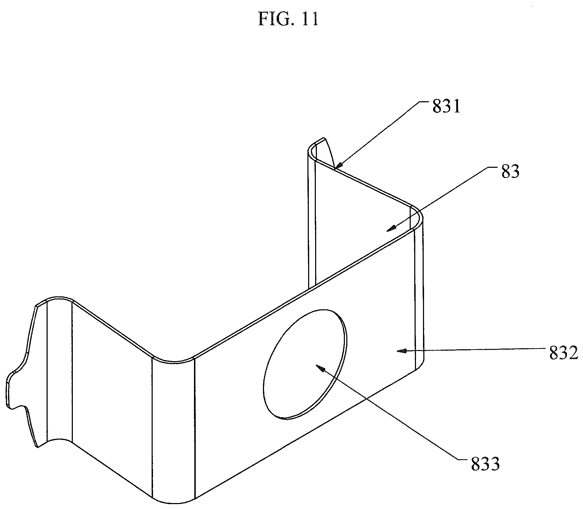

- La figure 11 représente une vue en perspective d'un frein.

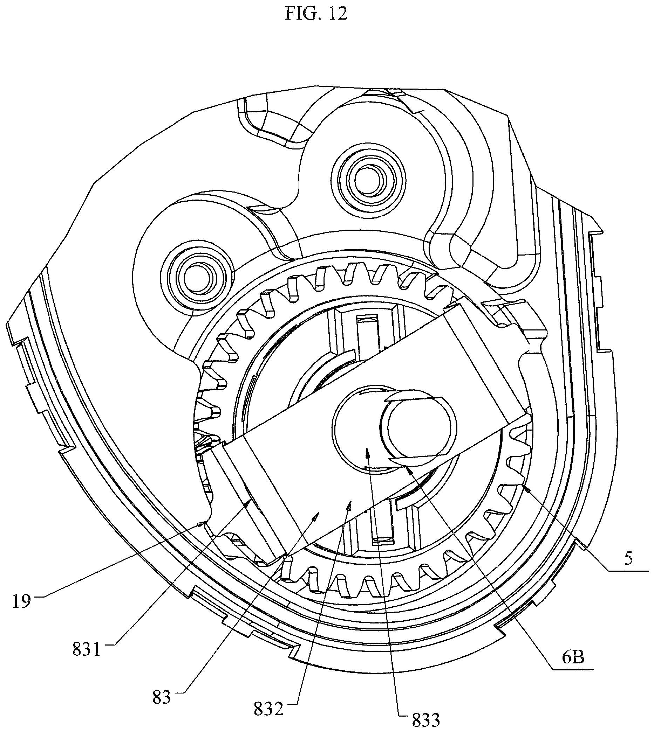

- La figure 12 représente une vue de détail d'un frein, en position sur l'arbre.

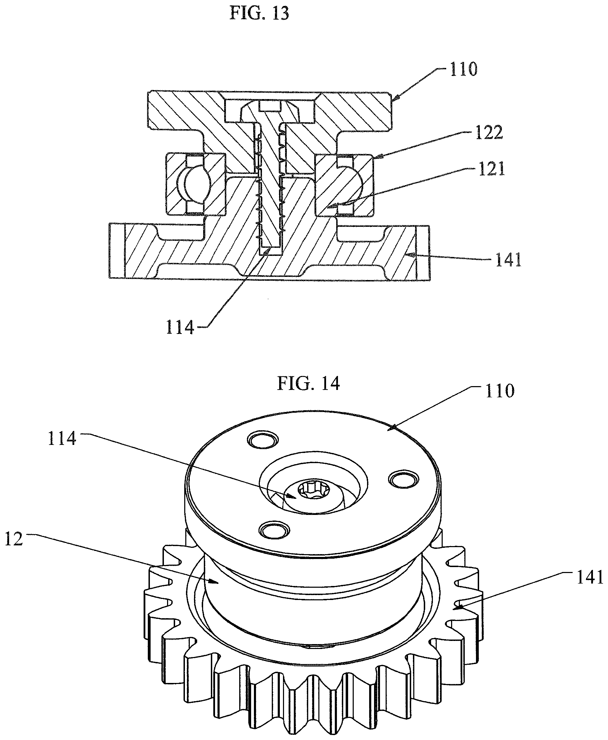

- La figure 13 représente une vue en coupe de la liaison entre train épicycloïdal et mécanisme d'engrenage.
- La figure 14 représente une vue en perspective de la figure 13.

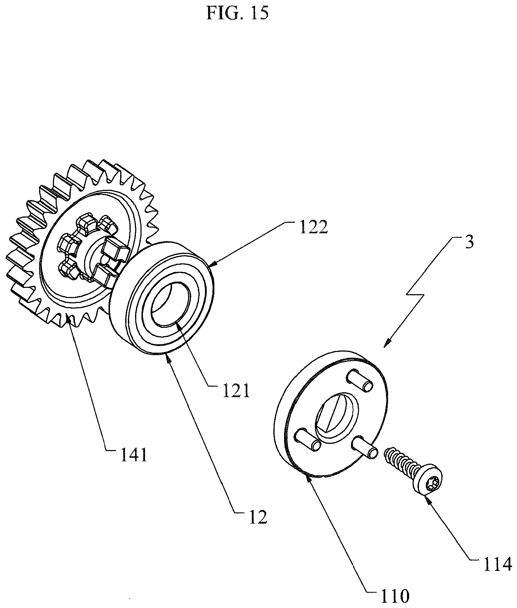

- La figure 15 représente une vue en position éclatée des éléments la constituant de la liaison entre train épicycloïdal et mécanisme d'engrenage.

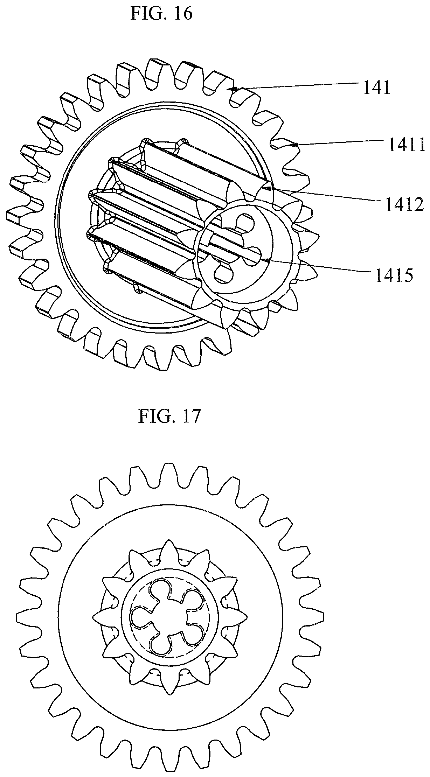

- La figure 16 représente une vue en perspective d'un pignon double.
- La figure 17 représente une vue prise depuis une extrémité d'un pignon double.
- La figure 18 représente une vue en position éclatée des éléments d'un autre mode de réalisation d'un mécanisme d'embrayage.
- La figure 19 représente une vue en coupe du mécanisme d'embrayage de la figure 18 avec une vue de détail suivant DD en position embrayée et une vue de détail suivant DD en position débrayée du mécanisme.

Comme mentionné ci-dessus, l'invention a pour objet une transmission plus particulièrement destinée à s'appliquer à un engin 1 roulant, notamment à conducteur marchant.

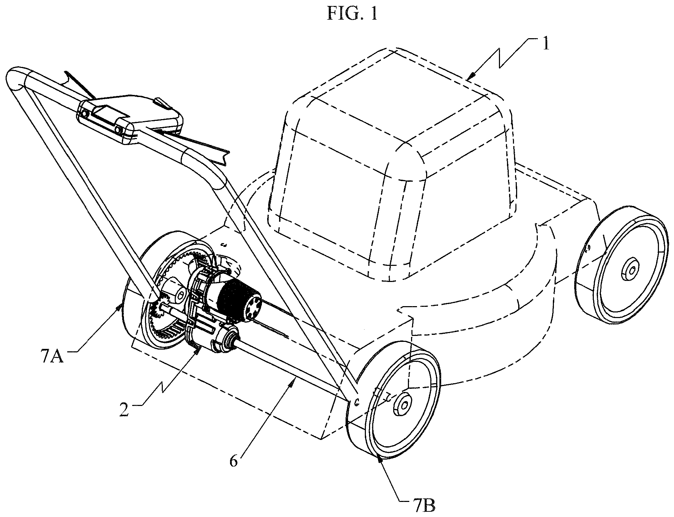

La figure 1 représente l'application d'une telle transmission à une tondeuse à gazon. Cette tondeuse à gazon comporte un châssis roulant, les roues arrière du châssis étant représentées en 7A, 7B aux figures.

La transmission a ici pour objet de transmettre un mouvement de rotation aux roues arrière dudit engin. La transmission comprend donc un arbre 6 réalisé d'un seul tenant ou en au moins deux sections 6A, 6B d'arbre coaxiales, et qui forment ici l'arbre d'entraînement des roues 7A, 7B d'une même paire de roues de l'engin.

Une roue 5 dentée motrice est montée libre à rotation sur l'arbre 6. Un mécanisme 8 d'embrayage est disposé entre l'arbre 6 ou chacune de ses sections 6A, 6B d'arbre et la roue 5 motrice.

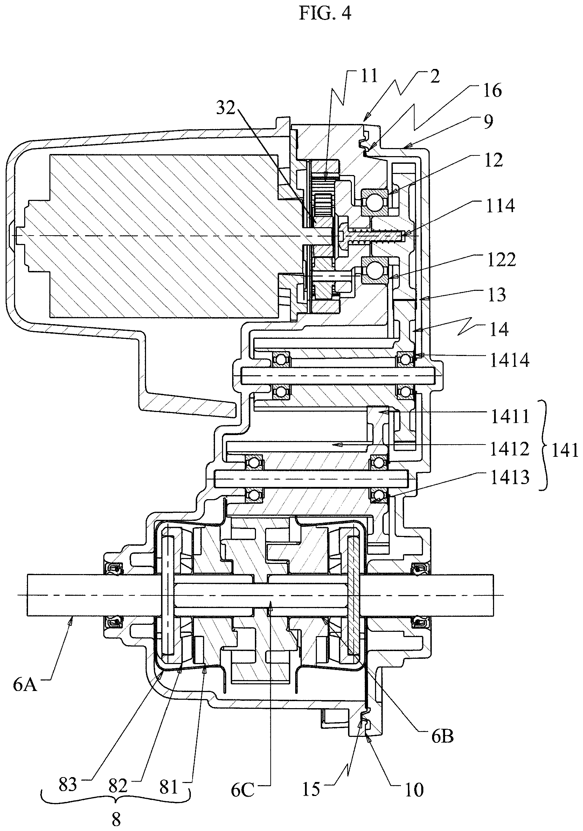

Dans l'exemple de la figure 4, l'arbre 6 est réalisé en deux sections 6A, 6B d'arbre coaxiales, reliées par un élément 6C de liaison sur lequel lesdites sections d'arbre sont montées libres à rotation pour pouvoir, à l'état aligné, être animées d'un déplacement relatif en rotation. Dans ce cas, la transmission comporte deux mécanismes 8 d'embrayage, disposés chacun entre la roue 5 dentée motrice, et une section 6A, 6B d'arbre d'entraînement de roue. Ces mécanismes 8 d'embrayage sont aptes à transmettre, l'un, la transmission du mouvement de la roue 5 motrice à la section 6A d'arbre d'entraînement de roue, l'autre, la transmission du mouvement de la roue 5 motrice à la section 6B d'arbre d'entraînement de roue. Ainsi, la roue 5 motrice disposée coaxiale aux sections d'arbre d'entraînement de roue est disposée entre deux mécanismes d'embrayage, chaque mécanisme 8 d'embrayage étant porté au moins partiellement par une section d'arbre de roue d'une même paire de roues de l'engin.

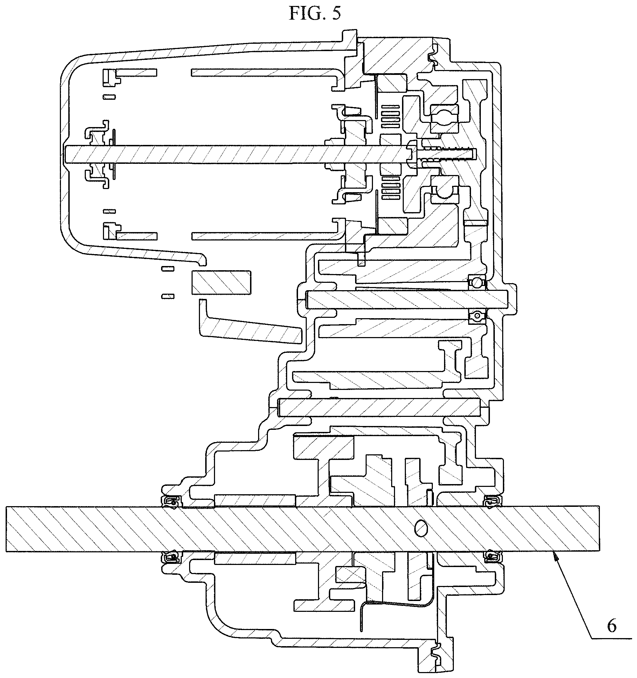

Dans l'exemple représenté à la figure 5, l'arbre 6 est réalisé d'un seul tenant et ne porte qu'un seul mécanisme 8 d'embrayage. La conception et le fonctionnement des mécanismes 8 d'embrayage entre figures 4 et 5, sont identiques.

Chaque mécanisme 8 d'embrayage comprend un plateau 81 d'embrayage monté libre à rotation sur l'arbre 6 ou la section 6A, 6B d'arbre associée, une pièce 82 portée par et solidaire en rotation de l'arbre 6 ou de la section 6A, 6B d'arbre associé, et un frein 83 dudit plateau 81 d'embrayage à action permanente sur la vitesse angulaire.

Par "plateau d'embrayage", on entend un plateau qui participe de manière directe ou indirecte à l'embrayage.

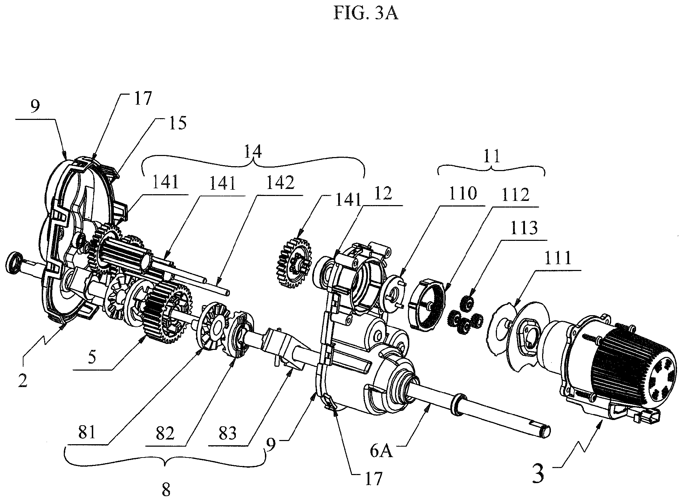

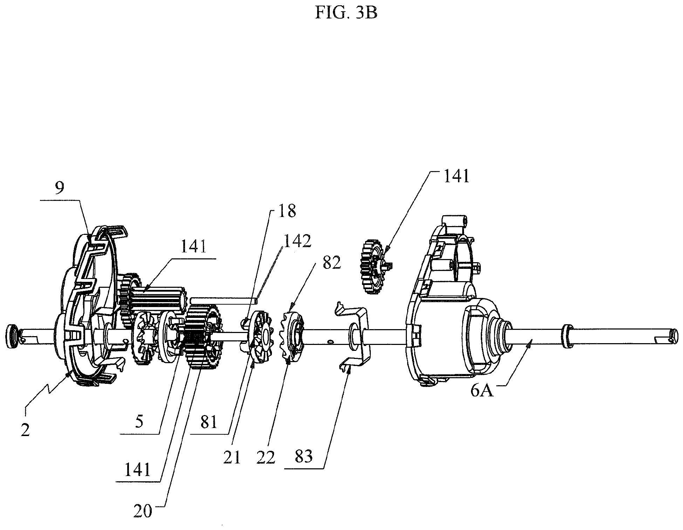

Dans l'exemple représenté aux figures 3A et 3B, ledit plateau 81 d'embrayage, disposé entre la roue 5 motrice et la pièce 82 et auquel le mouvement de rotation de la roue 5 motrice est apte à être transmis, est monté mobile axialement dans le sens d'un rapprochement et d'un écartement de la roue 5 motrice et est disposé, à l'état activé du mécanisme 8 d'embrayage écarté de la roue 5 dentée motrice et en prise avec la pièce 82 portée par et solidaire en rotation de l'arbre 6 ou de la section 6A, 6B d'arbre et, à l'état désactivé, rapproché de la roue 5 motrice et désaccouplé de la pièce 82 portée par et solidaire en rotation de l'arbre 6 ou de la section 6A, 6B d'arbre.

Pour permettre un tel déplacement axial du plateau 81 d'embrayage le long de l'arbre ou de la section d'arbre qui le porte, le plateau 81 d'embrayage et la pièce 82 de chaque mécanisme d'embrayage et la roue 5 motrice sont munis, sur au moins l'une de leurs faces, de rampes.

Les rampes 18 d'une face du plateau 81 coopèrent, lors de la phase d'activation obtenue par entraînement en rotation de la roue 5 motrice suivant un premier sens d'entraînement en rotation dit marche avant, avec les rampes 20 d'une face de la roue 5 motrice pour un déplacement axial du plateau 81 d'embrayage dans une première direction d'écartement de la roue 5 motrice et de solidarisation du plateau 81 d'embrayage avec la pièce 82 portée par, et solidaire en rotation de, l'arbre 6 ou de la section 6A, 6B d'arbre.

Les rampes 21 de l'autre face du plateau 81 coopèrent, lors de la phase de désactivation obtenue par entraînement en rotation de l'arbre ou de la section d'arbre avec lequel le mécanisme d'embrayage coopère à une vitesse supérieure à la vitesse de rotation de la roue 5 motrice, avec des rampes 22 d'une face de la pièce 82 portée par et solidaire en rotation de l'arbre 6 ou de la section 6A, 6B d'arbre pour provoquer, par déplacement axial de sens opposé dudit plateau 81 d'embrayage, la mise en roue libre de l'arbre 6 ou de la section 6A, 6B d'arbre.

À l'état activé, le plateau d'embrayage est donc disposé écarté de la roue 5 motrice, c'est-à-dire éloigné de la roue 5 motrice d'une distance supérieure à celle qui le sépare de la roue 5 motrice à l'état désactivé.

Les rampes de la roue 5 dentée et du plateau 81 d'embrayage sont ici formées par l'un des flancs de crénelures ou dents en saillie desdites faces.

Dans l'exemple représenté à la figure 3B, la roue dentée constitutive de l'organe 5 mené présente, sur chacune de ses faces une couronne de dents avec chaque dent comportant deux flancs parallèles à l'axe de rotation de l'arbre d'entraînement de roue, chaque flanc étant raccordé au sommet de la dent par un pan coupé.

Le plateau 81 d'embrayage comporte, sur sa face tournée vers l'organe 5 mené, une couronne de dents avec chaque dent comportant un flanc parallèle à l'axe de rotation des sections d'arbre d'entraînement de roue et un flanc incliné formant un angle avec ledit axe de rotation. Le flanc incliné est formé par la rampe représentée en 18 aux figures.

Ce flanc est le flanc sollicité lors de l'entraînement en marche avant de la roue 5 dentée motrice, par contact d'appui avec une dent de la roue 5 dentée motrice, pour provoquer un déplacement axial du plateau d'embrayage dans le sens d'un écartement de la roue 5 dentée.

L'autre face du plateau, c'est-à-dire celle tournée vers la pièce 82 solidaire en rotation de la section d'arbre d'entraînement de roue, qui est ici formée par une roue à rampe, comporte, de la même manière, une couronne de dents à flancs, l'un droit, l'autre incliné.

La pièce 82 qui se présente sous forme d'une roue solidaire en rotation de la section d'arbre d'entraînement de roue comporte également une couronne de dents dont chaque dent présente l'un de ses flancs incliné et l'autre flanc droit.

Pour chaque dent du plateau 81 et de la pièce 82, un flanc droit d'une dent du plateau coopère avec un flanc droit d'une dent de la pièce 82 solidaire en rotation de la section d'arbre d'entraînement de roue, lors de l'entraînement en marche avant de la roue 5 motrice à l'état écarté du plateau 81 d'embrayage de la roue 5 motrice.

Cette coopération par contact d'appui se poursuit tant que la vitesse d'entraînement en rotation de la section d'arbre d'entraînement de roue est inférieure à la vitesse de la roue 5 motrice.

Lorsque la vitesse d'entraînement en rotation de roue devient supérieure à la vitesse de rotation de la roue 5 motrice, par exemple lors d'une prise de virage avec la roue de l'arbre formant la roue extérieure dans ledit virage, la section d'arbre d'entraînement et sa pièce 82 deviennent menantes, de sorte que chaque dent de la pièce 82 coopère au niveau de son flanc incliné formant rampe, par contact d'appui avec le flanc incliné formant rampe des dents du plateau d'embrayage, pour provoquer un déplacement axial du plateau d'embrayage dans le sens d'un rapprochement de la roue 5 dentée jusqu'à une position désaccouplée desdites rampes, correspondant à l'état désactivé du mécanisme d'embrayage.

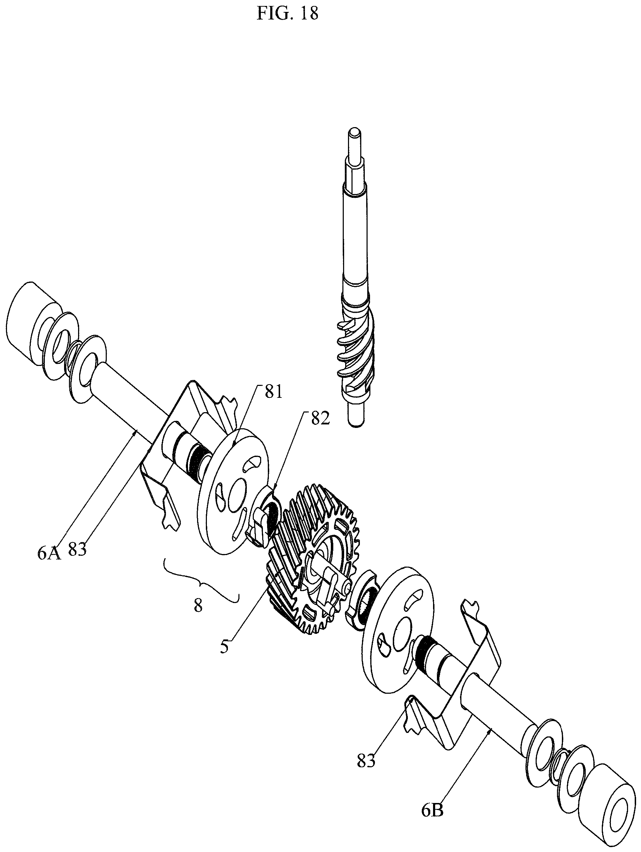

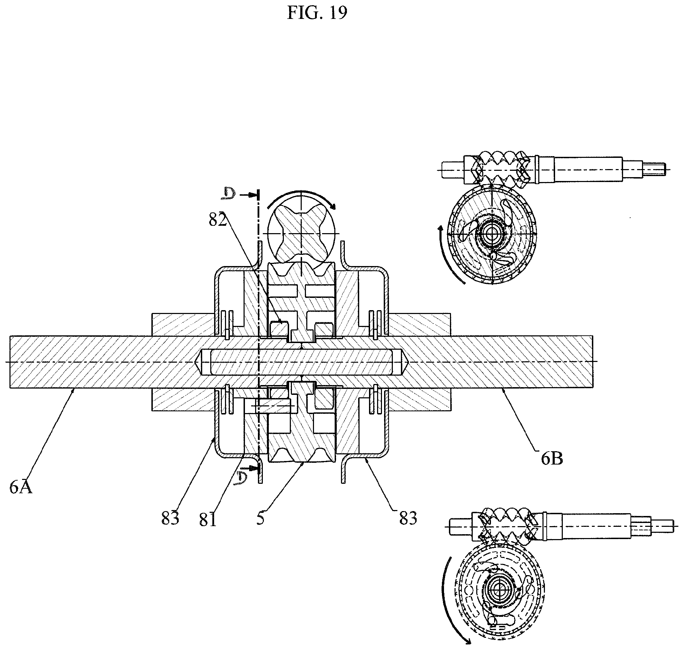

Les figures 18 et 19 illustrent une variante du mécanisme d'embrayage. Dans un tel mécanisme d'embrayage, la roue 5 motrice porte une clavette équipée d'un pion monté mobile à coulissement dans une lumière en forme de haricot du plateau 81 d'embrayage pour permettre un déplacement de la clavette d'une position débrayée à une position embrayée en prise avec une pièce 82 qui affecte ici la forme d'un moyeu solidaire en rotation de l'arbre ou de la section d'arbre associé. A nouveau, ce moyeu comprend une rampe qui coopère avec la clavette pour le passage de la clavette d'une position en prise avec le moyeu correspondant à l'état activé du mécanisme d'embrayage à une position écartée du moyeu correspondant à l'état désactivé du mécanisme d'embrayage lorsque la vitesse d'entraînement en rotation de la roue de l'engin devient supérieure à la vitesse de rotation de la roue 5 motrice.

Comme mentionné ci-dessus, chaque plateau 81 d'embrayage est freiné de manière permanente, à l'aide d'un frein 83 enfilé sur l'arbre ou la section 6A, 6B d'arbre portant ledit plateau 81. Ainsi, dans le cas d'un arbre 6 réalisé d'un seul tenant, la transmission comprend un seul frein, alors qu'elle en comporte deux, c'est-à-dire un par plateau lorsque l'arbre 6 est réalisé en deux sections 6A, 6B d'arbre coaxiales.

Ce frein 83 est à chaque fois un organe de freinage par friction actif par contact d'appui permanent sur le bord périphérique externe appelé chant ou tranche dudit plateau 81 d'embrayage. Ce frein 83, qui affecte ici la forme générale d'un U, est monté fixe en rotation autour de l'arbre ou de la section d'arbre d'entraînement de roue associée audit plateau d'embrayage.

Ce frein 83 comprend deux lames 831 ressort s'étendant le long de l'arbre 6 ou de la section 6A, 6B d'arbre portant ledit plateau 81 d'embrayage, et une zone 832 de liaison desdites lames 831 ressort entre elles.

Ladite zone 832 de liaison, disposée à ou au voisinage d'une des extrémités des lames 831 ressort, est munie d'un orifice 833 traversant, pour permettre d'enfiler ledit frein 83 sur l'arbre 6, ou sur la section 6A, 6B d'arbre portant ledit plateau 81 d'embrayage.

Lesdites lames 831 ressort du frein 83 de plateau 81 d'embrayage sont montées, de manière fixe en rotation, autour de l'arbre 6 ou de la section 6A, 6B d'arbre portant ledit plateau 8 d'embrayage et, de préférence, de manière diamétralement opposée par rapport à l'arbre 6 ou à la section 6A, 6B d'arbre portant ledit plateau 81 d'embrayage.

Comme l'arbre 6 ou les sections 6A, 6B d'arbre, la roue 5 motrice et chaque mécanisme 8 d'embrayage sont logés au moins partiellement à l'intérieur d'un boîtier, les lames 831 ressort sont pour leur montage fixe à rotation, recourbées à leurs extrémités libres, pour former une languette apte à coulisser dans une rainure 19 axiale du boîtier 2.

Dans les exemples représentés, le frein 83 est formé d'un flan métallique plié et découpé.

Pour permettre l'entraînement en rotation de la roue 5 motrice, la transmission comprend des moyens 3 menants moteurs, qui peuvent affecter un grand nombre de formes. Ainsi, ces moyens 3 menants moteurs peuvent être formés d'une transmission à courroie entre un arbre moteur et une vis sans fin en prise avec la roue 5 dentée.

Dans l'exemple représenté, les moyens 3 menants moteurs comprennent un moteur 31 équipé d'un arbre moteur 32, ledit arbre 32 moteur s'étendant parallèlement à l'axe longitudinal de l'arbre 6 ou de chacune des sections 6A, 6B d'arbre. Ces moyens 3 menants moteurs comprennent encore, disposé entre l'arbre 32 moteur et la roue 5 dentée, en prise permanente avec ladite roue 5 dentée, un mécanisme 14 d'engrenage et, entre l'arbre 32 moteur et le mécanisme 14 d'engrenage, un train épicycloïdal, ces éléments permettant la transmission du mouvement de rotation de l'arbre 32 moteur à ladite roue 5 dentée.

Il doit être noté que l'arbre 32 moteur peut être entraîné en rotation suivant une direction ou suivant deux directions opposées.

Le mécanisme 14 d'engrenage disposé entre l'arbre 32 moteur et la roue 5 dentée et avec lequel la roue 5 dentée est en prise permanente par engrènement comprend une pluralité de pignons 141 montés chacun à rotation autour d'un axe s'étendant parallèlement à l'arbre 32 moteur et à l'arbre 6 d'entraînement des roues ou à chacune des sections 6A, 6B d'arbre d'entraînement des roues.

Cette pluralité de pignons 141 comprend un pignon 141 monté solidaire en rotation du porte-satellites 110 du train épicycloïdal qui sera décrit ci-après et deux pignons 141 doubles comprenant chacun deux dentures de diamètre différent. Lesdits pignons 141 doubles sont identiques d'un pignon à un autre.

Chaque pignon 141 double est porté par un axe 142 support, qui s'étend entre deux éléments de boîtier. Lesdits axes 142 support sont identiques d'un pignon 141 double à un autre, pour une simplicité de fabrication.

Chaque pignon 141 double comprend, montés solidaires en rotation et disposés de manière coaxiale, une roue 1411 dentée apte à former la première denture du pignon 141 et un tube 1412 nervuré apte à former la deuxième denture du pignon, lesdits pignons 141 doubles étant décalés axialement pour permettre audit pignon 141 double dit aval en prise par engrènement avec l'organe 5 mené de venir en prise par sa roue 1411 dentée avec le tube 1412 nervuré du pignon 141 double dit amont positionné par rapport au pignon aval, plus proche de l'arbre 32 moteur.

Chaque pignon 141 double est muni, à l'intérieur de sa roue 1411 dentée, d'un logement 1413 annulaire, et un organe 1414 de roulement est logé dans le pignon 141 double dit amont positionné le plus proche de l'arbre 32 moteur.

Ce pignon 141 double amont vient en prise avec le pignon 141 monté solidaire en rotation du porte-satellites 110 du train 11 épicycloïdal qui sera décrit ci-après.

Chaque pignon 141 double est muni intérieurement d'au moins une gorge 1415 longitudinale, en l'occurrence ici cinq gorges longitudinales. Chaque gorge 1415 est apte à former une réserve de lubrifiant. Chaque gorge longitudinale présente un profil courbe en forme de pétale de fleur depuis une extrémité de ladite gorge.

Le train 11 épicycloïdal disposé entre le mécanisme 14 d'engrenage et l'arbre 32 moteur comprend quant à lui un planétaire 111 intérieur monté solidaire en rotation de l'arbre 32 moteur, un planétaire 112 extérieur appelé couronne fixé au boîtier 2, des satellites 113 en prise par engrènement avec les planétaires, et un porte-satellites 110 auquel le mouvement de rotation de l'arbre 32 moteur est transmis via le train 11 épicycloïdal.

Ce porte-satellites 110 forme lui-même, avec le pignon 141 du mécanisme d'engrenage, un ensemble rotatif porté et guidé en rotation, à l'intérieur du boîtier, par un roulement 12 mécanique.

Ce roulement 12 comprend une bague 121 intérieure, à l'intérieur de laquelle ledit ensemble est logé au moins partiellement, et une bague 122 extérieure entourant la bague 121 intérieure.

Les bagues intérieure et extérieure sont des bagues coaxiales montées libres à rotation l'une par rapport à l'autre. La bague 122 est montée fixe à l'intérieur du boîtier 2.

Des organes roulants tels que des billes, aiguilles ou autres, sont disposés entre les bagues intérieure et extérieure pour permettre ce montage libre à rotation desdites bagues l'une par rapport à l'autre. La bague intérieure du roulement est, pour son montage, solidaire en rotation avec le porte-satellites 110 et le pignon 141, prise en sandwich entre le porte-satellites 110 et le pignon 141.

À cet effet, le porte-satellites 110 et le pignon 141 présentent chacun une partie interne à la bague intérieure du roulement, insérée dans la bague, une partie externe à la bague intérieure du roulement et, au niveau de l'interface entre parties interne et externe, un épaulement.

La bague 121 intérieure du roulement 12, qui comprend une face circonférentielle interne, une face circonférentielle externe et deux faces latérales reliant entre elles les faces circonférentielles est prise en sandwich entre le porte-satellites 110 et le pignon 141, au niveau de ses faces latérales, lesdites faces latérales étant enserrées entre les épaulements du porte-satellites 110 et du pignon 141.

Le porte-satellites 110 et le pignon 141 sont, en outre, pour un montage solidaire en rotation, reliés l'un à l'autre par un organe de liaison, en l'occurrence une vis 114, et présentent des formes géométriques complémentaires.

L'entraînement en rotation du planétaire intérieur entraîne en rotation les satellites 113 en prise par engrènement avec la denture circonférentielle interne de la couronne formant le planétaire 112 extérieur. Comme cette couronne est une couronne stationnaire fixée au boîtier, les satellites 113 enfilés chacun sur un axe du porte-satellites tendent à entraîner en rotation le porte-satellites 110, qui lui-même entraîne en rotation le pignon 141 dont il est monté solidaire.

Ce mouvement de rotation est transmis par le mécanisme 14 d'engrenage à la roue 5 dentée, qui est montée libre à rotation sur l'arbre 6 d'entraînement des roues de l'engin.

Comme mentionné ci-dessus, l'arbre 6, la roue 5 motrice et chaque mécanisme 8 d'embrayage sont logés au moins partiellement à l'intérieur d'un boîtier 2
Le boîtier 2 présente au moins deux éléments 9 de boîtier assemblables par un plan 10 de joint et l'arbre 6 d'entraînement de roues ou chacune des sections 6A, 6B d'arbre d'entraînement de roue s'étend transversalement, de préférence orthogonalement, audit plan 10 de joint à l'état assemblé des deux éléments 9 de boîtier.

Chaque section d'arbre traverse donc un élément 9 de boîtier au niveau du fond de la demi-coquille formée par ledit élément de boîtier. Ce boîtier 2, qui délimite à l'état assemblé desdits éléments 9 une cavité 13, comprend des moyens 15 d'étanchéité de ladite cavité 13 s'étendant au niveau du plan 10 de joint, en entourant ladite cavité 13 et des moyens 17 de maintien des éléments 9 de boîtier en applique l'un contre l'autre par encliquetage.

Dans l'exemple représenté par exemple aux figures 5, 9, 10, les moyens 15 d'étanchéité de ladite cavité sont des moyens 16 de liaison par collage desdits éléments 9 de boîtier.

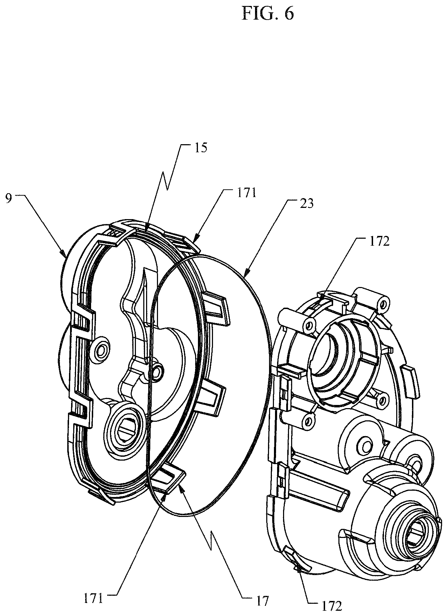

En variante ou en complément, et de manière non préférée, ces moyens 15 d'étanchéité auraient pu être également réalisés par un joint 23 venant s'insérer dans une gorge ménagée au niveau du plan de joint, ce joint entourant ladite cavité 13 comme représenté à la figure 6.

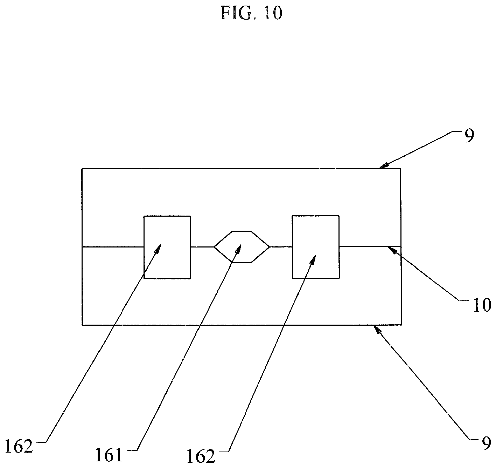

Lorsque les moyens 16 de liaison par collage sont des moyens 16 de liaison comme représentés à la figure 10, les moyens 16 de liaison par collage comprennent une gorge 161 dite principale de réception de colle. Cette gorge 161 principale périphérique entoure ladite cavité 13 et est disposée entre deux gorges 162 dites auxiliaires doublant chacune la gorge 161 principale à l'état assemblé desdites éléments 9 de boîtier.

La gorge principale est formée par deux rainures périphériques disposées chacune sur un élément de boîtier, en s'étendant autour de la cavité, lesdites rainures étant positionnées en regard l'une de l'autre, à l'état assemblé des éléments de boîtier. Il en est de même des gorges auxiliaires.

Ainsi, lors de l'assemblage des éléments de boîtier par collage, on dépose de la colle dans l'une ou dans chacune des rainures de la gorge principale, et on rapproche les éléments de boîtier. Si un excès de colle est déposé dans la gorge principale, cet excès flue en direction des gorges auxiliaires, qui empêchent l'une la pénétration de colle à l'intérieur du boîtier, l'autre des bavures de colle à l'extérieur du boîtier.

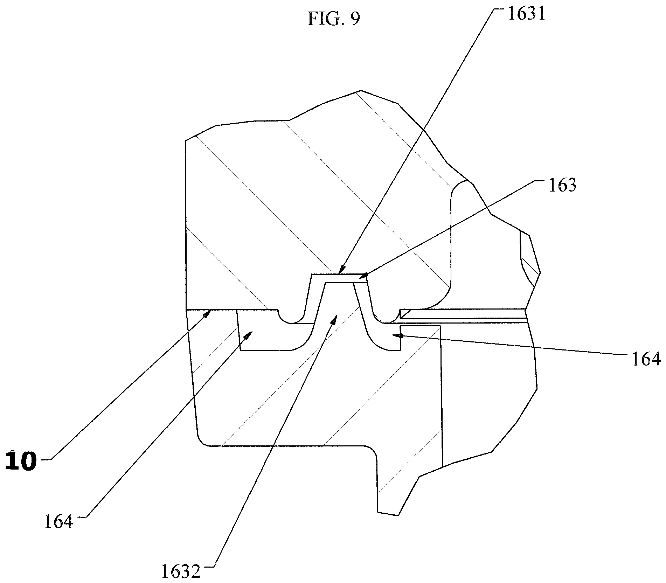

Lorsque les moyens 16 de liaison par collage sont des moyens 16 de liaison comme représentés à la figure 9, les moyens 16 de liaison par collage comprennent une gorge 163 dite principale de réception de colle entourant ladite cavité 13, et au moins une gorge 164 auxiliaire doublant la gorge 163 principale à l'état assemblé desdits éléments 9 de boîtier. Ladite gorge 163 principale périphérique comprend un élément 1631 femelle, tel qu'une rainure, porté par un élément 9 de boîtier. Cet élément 1631 femelle est disposé en regard d'un élément 1632 mâle, tel qu'une nervure, porté par l'autre élément 9 de boîtier à l'état assemblé desdits éléments 9 de boîtier avec l'élément 1632 mâle s'emboitant au moins partiellement dans l'élément 1631 femelle à l'état assemblé desdits éléments 9 de boîtier.

La ou les gorges auxiliaires peuvent être formées, par exemple, par une simple rainure entourant la cavité, et ménagée dans au moins un élément de boîtier.

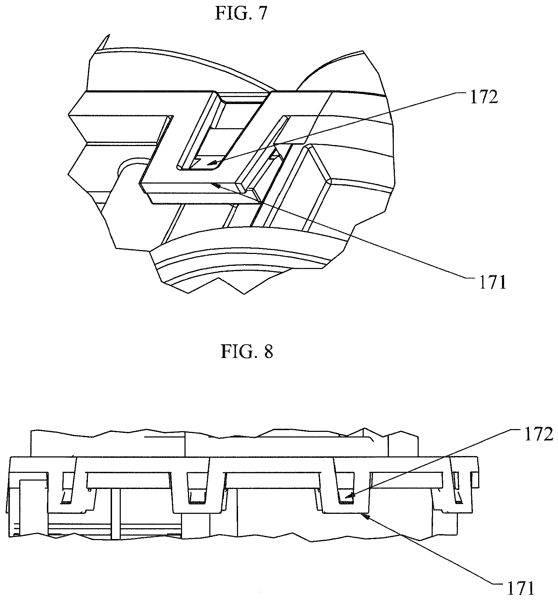

Comme mentionné ci-dessus, le boîtier comprend encore des moyens 17 de maintien des éléments de boîtier en applique l'un contre l'autre par encliquetage. Dans l'exemple représenté aux figures 6 à 8, les moyens 17 de maintien des éléments 9 de boîtier en applique l'un contre l'autre par encliquetage comprennent une pluralité d'ergots 172 disposés sur le pourtour de l'un des éléments 9 de boîtier et une pluralité de créneaux évidés disposés sur le pourtour de l'autre élément 9 de boîtier pour former une pluralité d'anses 171, chaque ergot 172 étant apte à s'insérer dans une anse 171 à l'état appliqué l'un contre l'autre par leur plan 10 de joint des éléments 9 de boîtier.

Les anses 171 sont élastiquement déformables et tendent, lors du rapprochement des éléments de boîtier, au contact des ergots, à s'écarter du boîtier avant de se rapprocher du boîtier pour entourer les ergots, une fois l'ergot franchi par le sommet de l'anse. Ce maintien par encliquetage s'opère après dépose de la colle, lors du positionnement en applique des éléments de boîtier l'un contre l'autre, dans une position correspondant à la position fermée du boîtier.

Ce maintien par encliquetage permet à l'opérateur de ne pas avoir à maintenir les éléments de boîtier assemblés, jusqu'à prise de la colle.

## Revendications

1. Transmission comprenant un arbre (6) réalisé d'un seul tenant ou en au moins deux sections (6A, 6B) d'arbre coaxiales, une roue (5) dite dentée motrice montée libre à rotation sur ledit arbre (6), et, soit un mécanisme (8) d'embrayage disposé entre l'arbre (6) et la roue (5) motrice lorsque l'arbre (6) est réalisé d'un seul tenant, soit deux mécanismes (8) d'embrayage disposés l'un entre la section (6A) d'arbre et la roue (5) motrice, l'autre entre l'autre section (6B) d'arbre et la roue (5) motrice, le ou chaque mécanisme (8) d'embrayage étant activé par l'entraînement en rotation de la roue (5) motrice suivant un premier sens d'entraînement en rotation dit marche avant, et désactivable par l'entraînement en rotation en marche avant de l'arbre (6) ou de la section (6A ; 6B) d'arbre avec lequel il coopère, lorsque la vitesse de rotation de l'arbre (6) ou de ladite section (6A ; 6B) d'arbre est supérieure à la vitesse de rotation de la roue (5) motrice, l'arbre (6) d'entraînement de roues ou chaque section d'arbre (6A ; 6B) d'entraînement de roue étant, à l'état désactivé du mécanisme (8) d'embrayage correspondant, libre de tourner dans l'un quelconque de ses sens de rotation, le ou chaque mécanisme (8) d'embrayage comprenant un plateau (81) d'embrayage monté libre à rotation sur l'arbre (6) ou la section (6A, 6B) d'arbre associée et auquel le mouvement de rotation de la roue (5) motrice est apte à être transmis, une pièce (82) portée par, et solidaire en rotation de l'arbre (6) ou de la section (6A, 6B) d'arbre associée et un frein dudit plateau d'embrayage à action permanente sur la vitesse angulaire dudit plateau (81),
**caractérisée en ce que** le frein (83) du ou d'au moins l'un des plateaux (81) d'embrayage est enfilé sur l'arbre (6) ou sur la section (6A, 6B) d'arbre portant ledit plateau (81), ce frein (83) qui affecte la forme d'un U comprenant deux lames (831) ressort s'étendant le long de l'arbre (6) ou de la section (6A, 6B) d'arbre portant ledit plateau (8) d'embrayage et une zone (832) de liaison desdites lames (831) ressort entre elles, ladite zone (832) de liaison, disposée à ou au voisinage d'une des extrémités des lames (831) ressort, étant munie d'un orifice (833) traversant pour permettre d'enfiler ledit frein (83) sur l'arbre (6) ou la section (6A, 6B) d'arbre portant ledit plateau (8) d'embrayage.

2. Transmission selon la revendication 1,
**caractérisée en ce que** le frein (83) du ou d'au moins l'un des plateaux (81) d'embrayage est un organe de freinage par friction actif par contact d'appui permanent sur le bord périphérique externe, encore appelé chant ou tranche, dudit plateau (81) d'embrayage.

3. Transmission selon l'une des revendications précédentes,
**caractérisée en ce que** le frein (83) du ou d'au moins l'un des plateaux (81) d'embrayage est monté fixe en rotation autour de l'arbre (6) ou de la section (6A, 6B) d'arbre d'entraînement de roue associé audit plateau (81) d'embrayage.

4. Transmission selon l'une des revendications 1 à 3,
**caractérisée en ce que** lesdites lames (831) ressort du frein (83) de plateau (81) d'embrayage sont montées de manière fixe en rotation autour de l'arbre (6) ou de la section (6A, 6B) d'arbre portant ledit plateau (8) d'embrayage et, de préférence, de manière diamétralement opposée par rapport à l'arbre (6) ou à la section (6A, 6B) d'arbre portant ledit plateau (81) d'embrayage.

5. Transmission selon la revendication 4,
**caractérisée en ce que** l'arbre (6) ou les sections (6A, 6B) d'arbre, la roue (5) motrice et chaque mécanisme (8) d'embrayage sont logés au moins partiellement à l'intérieur d'un boîtier (2) et **en ce que** les lames (831) ressort sont, pour leur montage fixe à rotation, recourbées à leur extrémité libre pour former une languette apte à coulisser dans une rainure (19) axiale du boîtier (2).

6. Transmission selon l'une des revendications précédentes,
**caractérisée en ce que** le frein (83) du ou d'au moins l'un des plateaux (81) d'embrayage est formé d'un flan plié et découpé.

7. Transmission selon l'une des revendications précédentes,
**caractérisée en ce que** ledit plateau (81) d'embrayage, disposé entre roue (5) motrice et pièce (82) est monté mobile axialement dans le sens d'un rapprochement et d'un écartement de la roue (5) motrice et est disposé, à l'état activé du mécanisme (8) d'embrayage, en prise avec la pièce (82) portée par, et solidaire en rotation de l'arbre (6) ou de la section (6A ; 6B) d'arbre et, à l'état désactivé, désaccouplé de la pièce (82) portée par, et solidaire en rotation de l'arbre (6) ou de la section (6A ; 6B) d'arbre.

8. Transmission selon l'une des revendications précédentes,
**caractérisée en ce que** le plateau (81) d'embrayage et la pièce (82) du ou d'au moins l'un des mécanismes (8) d'embrayage et la roue (5) motrice sont munis, sur au moins l'une de leurs faces, de rampes, les rampes (18) d'une face du plateau (81) coopérant, lors de la phase d'activation, avec les rampes (20) d'une face de la roue (5) motrice pour un déplacement axial du plateau (81) d'embrayage dans une première direction d'écartement de la roue (5) motrice et de solidarisation du plateau (81) d'embrayage avec la pièce (82) portée par, et solidaire en rotation de, l'arbre (6) ou de la section (6A, 6B) d'arbre, les rampes (21) de l'autre face du plateau (81) coopérant, lors de la phase de désactivation, avec des rampes (22) d'une face de la pièce (82) portée par, et solidaire en rotation de, l'arbre (6) ou de la section (6A, 6B) d'arbre pour provoquer par déplacement axial de sens opposé dudit plateau (81) d'embrayage, la mise en roue libre de l'arbre (6) ou de la section (6A, 6B) d'arbre.

9. Transmission selon l'une des revendications précédentes,
**caractérisée en ce que** la transmission comprend des moyens (3) menants moteurs de la roue (5) motrice, lesdits moyens (3) menants moteurs comprenant un moteur (31) équipé d'un arbre (32) moteur, ledit arbre (32) moteur s'étendant parallèlement à l'axe longitudinal de l'arbre (6) ou de chacune des sections (6A, 6B) d'arbre.

10. Transmission selon la revendication 9,
**caractérisée en ce que** les moyens (3) menants moteurs comprennent en outre un mécanisme (14) d'engrenage disposé entre l'arbre (32) moteur et la roue (5) motrice, ce mécanisme (14) d'engrenage, avec lequel la roue (5) motrice est en prise permanente par engrènement, comprenant une pluralité de pignons (141) montés chacun à rotation autour d'un axe s'étendant parallèlement à l'arbre (32) moteur et à l'arbre (6) ou à chacune des sections (6A, 6B) d'arbre.

11. Transmission selon la revendication 10 du type dont l'arbre (6), la roue (5) motrice et chaque mécanisme (8) d'embrayage sont logés au moins partiellement à l'intérieur d'un boîtier (2),
**caractérisée en ce que** les moyens (3) menants moteurs d'entraînement en rotation de la roue (5) dentée comprennent, disposé entre le mécanisme (14) d'engrenage et l'arbre (32) moteur, un train (11) épicycloïdal comprenant un porte-satellites (110) auquel le mouvement de rotation de l'arbre (32) moteur est apte à être transmis, le porte-satellites (110) du train épicycloïdal étant monté solidaire en rotation d'un pignon (141) du mécanisme (14) d'engrenage, ce pignon (141) et le porte-satellites (110) formant un ensemble rotatif porté, et guidé en rotation à l'intérieur du boîtier (2), par un roulement (12) mécanique, ce roulement (12) comprenant une bague (121) intérieure à l'intérieur de laquelle ledit ensemble est logé au moins partiellement, et une bague (122) extérieure entourant la bague (121) intérieure, lesdites bagues intérieure (121) et extérieure (122) étant des bagues coaxiales montées libres en rotation l'une par rapport à l'autre, la bague (122) extérieure étant montée fixe à l'intérieur du boîtier (2)

12. Transmission selon l'une des revendications précédentes, du type dont l'arbre (6), la roue (5) motrice et chaque mécanisme (8) d'embrayage sont logés au moins partiellement à l'intérieur d'un boîtier (2),
**caractérisée en ce que** le boîtier (2) présente au moins deux éléments (9) de boîtier assemblables par un plan (10) de joint et **en ce que** l'arbre (6) d'entraînement de roues ou chacune des sections (6A ; 6B) d'arbre d'entraînement de roue s'étend transversalement, de préférence orthogonalement, audit plan (10) de joint à l'état assemblé des deux éléments (9) de boîtier.

13. Transmission selon la revendication 12,
**caractérisée en ce que** ledit boîtier (2), qui présente au moins deux éléments (9) de boîtier assemblables par un plan (10) de joint et délimitant à l'état assemblé une cavité (13), comprend des moyens (15) d'étanchéité de ladite cavité (13) s'étendant au niveau du plan (10) de joint en entourant ladite cavité (13) et des moyens (17) de maintien des éléments (9) de boîtier en applique l'un contre l'autre par encliquetage.

14. Engin (1) automoteur roulant à conducteur, de préférence marchant, tel que tondeuse à gazon,
**caractérisé en ce qu'**il est équipé d'une transmission conforme à l'une des revendications 1 à 13 et **en ce que** l'arbre (6) de la transmission est un arbre d'entraînement des roues (7A, 7B) dudit engin (1).

## Patentansprüche

1. Getriebe, umfassend eine Welle (6), die einstückig oder in mindestens zwei koaxialen Wellenabschnitten (6A, 6B) ausgebildet ist, ein Rad (5) ("treibendes Zahnrad"), das frei rotierend auf der Welle (6) montiert ist, und entweder einen Kupplungsmechanismus (8), der zwischen der Welle (6) und dem treibenden Rad (5) angeordnet ist, wenn die Welle (6) einstückig ausgebildet ist, oder zwei Kupplungsmechanismen (8), wobei einer zwischen dem Wellenabschnitt (6A) und dem treibenden Rad (5) und der andere zwischen dem anderen Abschnitt (6B) und dem treibenden Rad (5) angeordnet ist, wobei der bzw. jeder Kupplungsmechanismus (8) durch die Rotation des treibenden Rads (5) in einer ersten Antriebsrichtung ("Vorwärtsrotation") aktiviert wird und durch die Vorwärtsrotation der Welle (6) oder des Abschnitts (6A; 6B), mit dem dieser zusammenwirkt, deaktiviert werden kann, wenn die Drehzahl der Welle (6) bzw. des Wellenabschnitts (6A; 6B) die Drehzahl des treibenden Rads (5) übersteigt, wobei die Antriebswelle (6) der Räder bzw. jeder Antriebswellenabschnitt (6A; 6B) frei in einer beliebigen Rotationsrichtung rotieren kann, wenn der entsprechende Kupplungsmechanismus (8) deaktiviert ist, wobei der bzw. jeder Kupplungsmechanismus (8) eine Reibscheibe (81) umfasst, die frei rotierbare auf der Welle (6) oder dem jeweils zugeordneten Wellenabschnitt (6A, 6B) montiert ist, und auf die die Rotation des treibenden Rads (5) übertragen werden kann, ein Stück (82), das von der Welle (6) bzw. dem jeweils zugeordneten Abschnitt (6A, 6B) getragen wird und drehfest damit verbunden ist, und eine stetig auf den Winkelgeschwindigkeit der Scheibe (81) einwirkende Bremse der Reibscheibe,
**dadurch gekennzeichnet, dass** die Bremse (83) der bzw. mindestens einer Reibscheibe (81) auf der Welle (6) bzw. dem Abschnitt (6A, 6B) aufgesetzt ist, die die Scheibe (81) trägt, wobei die Bremse (83), die U-förmig ist, zwei Federblätter (831) umfasst, die sich entlang der Welle (6) bzw. des Abschnitts (6A, 6B), die die Reibscheibe (8) tragen, und eines Verbindungsbereichs (832) zwischen den Federblättern (831), erstrecken, wobei der Verbindungsbereich (832) an oder nahe einem der Enden der Federblätter (831) angeordnet ist, mit einer Durchgangsöffnung (833) versehen ist, um das Aufsetzen der Bremse (83) auf die Welle (6) oder den Abschnitt (6A, 6B), die die Reibscheibe (8) tragen, zu ermöglichen.

2. Getriebe nach Anspruch 1,
**dadurch gekennzeichnet, dass** die Bremse (83) der bzw. mindestens einer der Reibscheiben (81) eine Reibungsbremsvorrichtung ist, die durch dauerhaften Anlagekontakt mit der äußeren Umfangskante der Reibscheibe (81) wirkt.

3. Getriebe nach einem der vorstehenden Ansprüche,
**dadurch gekennzeichnet, dass** die Bremse (83) der bzw. mindestens einer der Reibscheiben (81) um die Welle (6) bzw. den Abschnitt (6A, 6B) des der Reibscheibe (81) zugeordneten treibenden Rads verdrehfest montiert ist.

4. Getriebe nach einem der Ansprüche 1 - 3,
**dadurch gekennzeichnet, dass** die Federblätter (831) der Bremse (83) der Reibscheibe (81) um die Welle (6) bzw. den Abschnitt (6A, 6B) verdrehfest montiert sind, die die Reibscheibe (8) tragen, und vorzugsweise der Welle (6) bzw. dem Abschnitt (6A, 6B), die die Reibscheibe (81) tragen, diametral entgegengesetzt sind.

5. Getriebe nach Anspruch 4,
**dadurch gekennzeichnet, dass** die Welle (6) oder die Abschnitte (6A, 6B), das treibende Rad (5) und jeder Kupplungsmechanismus (8) mindestens teilweise in einem Gehäuse (2) montiert sind, und dass die Federblätter (831) zwecks verdrehfester Montage am freien Ende gekrümmt sind, um eine Lasche zu bilden, die zum Gleiten in einer axialen Nut (19) des Gehäuses (2) geeignet ist.

6. Getriebe nach einem der vorstehenden Ansprüche,
**dadurch gekennzeichnet, dass** die Bremse (83) der bzw. mindestens einer der Reibscheiben (81) als zerkleinerter, gestapelter Zuschnitt ausgebildet ist.

7. Getriebe nach einem der vorstehenden Ansprüche,
**dadurch gekennzeichnet, dass** die zwischen dem Rad (5) und dem Stück (82) angeordnete Reibscheibe (81) derart axial beweglich montiert ist, dass sie sich dem Rad (5) annähert und sich davon entfernt und bei aktiviertem Kupplungsmechanismus (8) in das Stück (82) eingreift, das von der Welle (6) oder dem Abschnitt (6A; 6B) getragen wird und drehfest mit der Welle bzw. dem Abschnitt (6A, 6B) drehfest verbunden ist, und bei deaktiviertem Kupplungsmechanismus vom Stück (82) entkoppelt wird, das von der Welle (6) bzw. dem Abschnitt (6A; 6B) getragen wird und drehfest damit verbunden ist.

8. Getriebe nach einem der vorstehenden Ansprüche,
**dadurch gekennzeichnet, dass** die Reibscheibe (81) und das Stück (82) des bzw. mindestens eines der Kupplungsmechanismen (8) und das Rad (5) auf mindestens einer ihrer Seiten mit Rampen versehen sind, wobei die Rampen (18) einer Seite der Scheibe (81) bei der Aktivation mit den Rampen (20) einer Seite des Rades (5) zusammenwirken, um die Reibscheibe (81) in eine erste Richtung weg vom Rad (5) zur Verbindung mit dem Stück (82), das von der Welle (6) bzw. dem Abschnitt (6A, 6B) getragen wird und drehfest damit verbunden ist, zu verschieben, wobei die Rampen (21) der anderen Seite der Scheibe (81) bei der Deaktivation mit den Rampen (22) einer Seite des Stücks (82), das von der Welle (6) bzw. dem Abschnitt (6A, 6B) getragen wird und drehfest damit verbunden ist, um durch eine entgegengesetzte axiale Verschiebung der Reibscheibe (81) die Welle (6) bzw. den Abschnitt (6A, 6B) in Freilaufbetrieb zu versetzen.

9. Getriebe nach einem der vorstehenden Ansprüche,
**dadurch gekennzeichnet, dass** das Getriebe getriebene Antriebsmittel (3) des Rads (5) umfasst, wobei die Mittel (3) einen Motor (31) umfassen, der mit einer Motorwelle (32) versehen ist, wobei die Motorwelle (62) sich parallel zur Längsachse der Welle (6) bzw. jedem der Abschnitte (6A, 6B) erstreckt.

10. Getriebe nach Anspruch 9,
**dadurch gekennzeichnet, dass** die Mittel (3) ferner ein zwischen der Motorwelle (32) und dem Rad (5) angeordnetes Zahnradgetriebe (14) umfassen, wobei das Zahnradgetriebe (14), in das das Rad (5) ständig eingreift, eine Vielzahl Ritzel (141) umfasst, die jweils rotierend um eine Achse montiert sind, die sich parallel zur Motorwelle (32) und zur Welle (6) bzw. jedem der Abschnitte (6A, 6B) erstreckt.

11. Getriebe nach Anspruch 10, wobei die Welle (6), das Rad (5) und jeder Kupplungsmechanismus (8) mindestens teilweise in einem Gehäuse (2) untergebracht sind,
**dadurch gekennzeichnet, dass** die Mittel (3) zur Rotation des Rads (5) zwischen dem Zahnradgetriebe (14) und der Motorwelle (32) umfassen: ein Planetengetriebe (11), umfassend einen Planetenträger (110), auf den die Rotation der Motorwelle (32) übertragen werden kann, wobei der Planetenträger (110) des Planetengetriebes drehfest mit einem Ritzel (141) des Zahnradgetriebes (14) montiert ist, wobei das Ritzel (141) und der Planetenträger (110) eine Drehbaugruppe bilden, die im Gehäuse von einem Walzkörperkäfig (12) drehbar geführt wird, wobei der Walzkörperkäfig (12) einen Innenring (121), in dem die Baugruppe mindestens teilweise untergebracht ist, und einen Außenring (122), der den Innenring (121) umgibt, umfasst, wobei Innen- (121) und Außenring (122) koaxiale Ringe sind, die frei rotierend relativ zueinander montiert sind, wobei der Außenring (122) innerhalb des Gehäuses (2) ortsfest montiert ist.

12. Getriebe nach einem der vorstehenden Ansprüche, wobei die Welle (6), das Rad (5) und jeder Kupplungsmechanismus (8) mindestens teilweise in einem Gehäuse (2) untergebracht sind,
**dadurch gekennzeichnet, dass** das Gehäuse (2) mindestens zwei Gehäuseelemente (9) umfasst, die durch eine Trennebene (10) zusammengebaut werden können, und dass die Antriebswelle (6) bzw. jeder der Abschnitte (6A; 6B) sich quer, vozugsweise orthogonal, zur Trennebene (10) erstrecken, wenn die beiden Gehäuseelemente (9) zusammengebaut sind.

13. Getriebe nach Anspruch 12,
**dadurch gekennzeichnet, dass** das Gehäuse (2), das mindestens zwei Gehäuseelemente (9) umfasst, die durch eine Trennebene (10) zusammengebaut werden können und im zusammengebauten Zustand einen Hohlraum (13) abgrenzen, Mittel (15) zur Abdichtung des Hohlraums (13) umfasst, der sich auf Höhe der Trennebene erstrecken und den Hohlraum (13) umgeben, sowie Mittel (17), um die Gehäuseelemente (9) zusammengerastet zu halten.

14. Rollende selbstfahrende Maschine (1) mit einem vorzugsweise gehenden Bediener, z.B. Rasenmäher,
**dadurch gekennzeichnet, dass** sie mit einem Getriebe nach einem der Ansprüche 1-13 versehen ist und dass die Welle (6) des Getriebes eine Antriebswelle der Räder (7A, 7B) der Maschine (1) ist.

## Claims

1. A transmission comprising a shaft (6) made in one piece or in at least two coaxial shaft sections (6A, 6B), a toothed drive wheel (5) mounted freely rotating on said shaft (6), and either a clutch mechanism (8) arranged between the shaft (6) and the drive wheel (5) when the shaft (6) is made in one piece, or two clutch mechanisms (8) arranged one between the shaft section (6A) and the drive wheel (5), the other between the other shaft section (6B) and the drive wheel (5), the or each clutch mechanism (8) being activated by the rotational driving of the drive wheel in a first forward rotary drive direction, and being able to be deactivated by driving the shaft (6) or the shaft section (6A; 6B) with which it cooperates in rotation in the forward direction, when the speed of rotation of the shaft (6) or the shaft section (6A; 6B) is greater than the speed of rotation of the drive wheel (5), the shaft (6) for driving the wheels or each shaft section (6A; 6B) for driving a wheel being, in the deactivated state of the corresponding clutch mechanism (8), free to rotate in either of its directions of rotation, the or each clutch mechanism (8) comprising a clutch plate (81) mounted freely rotating on the associated shaft (6) or the associated shaft section (6A, 6B) and to which the rotational movement of the drive wheel (5) can be transmitted, a part (82) borne by, and secured in rotation with, the associated shaft (6) or shaft section (6A, 6B), and a brake of said clutch plate acting continuously on the angular speed of said plate (81),
**characterized in that** the brake (83) of the at least one of the clutch plate (81) is threaded on the shaft (6) or on the shaft section (6A, 6B) bearing said plate (81), this brake (83), which is U-shaped, comprising two spring blades (831) extending along the shaft (6) or the shaft section (6A, 6B) bearing said clutch plate (8) and a connection zone (832) of said spring blades (831) to one another, said connection zone (832), arranged at or near one of the ends of the spring blades (831), being provided with a through orifice (833) to allow said brake (83) to be threaded on the shaft (6) or the shaft section (6A, 6B) bearing said clutch plate (8).

2. The transmission according to claim 1,
**characterized in that** the brake (83) of the or of at least one of the clutch plates (81) is a friction brake member that is active by continuous bearing contact on the outer peripheral edge, also called ridge or rim, of said clutch plate (81).

3. The transmission according to one of the preceding claims,
**characterized in that** the brake (83) of the or of at least one of the clutch plates (81) is mounted fixed in rotation around the drive wheel shaft (6) or shaft section (6A, 6B) associated with said clutch plate (81).

4. The transmission according to one of claims 1 to 3,
**characterized in that** said spring blades (831) of the brake (83) of the clutch plate (81) are mounted fixed in rotation about the shaft (6) or the shaft section (6A, 6B) bearing said clutch plate (8), and preferably diametrically opposite relative to the shaft (6) or the shaft section (6A, 6B) bearing said clutch plate (81).

5. The transmission according to claim 4,
**characterized in that** the shaft (6) or the shaft sections (6A, 6B), the drive wheel (5) and each clutch mechanism (8) are housed at least partially inside a housing (2) and **in that** the spring blades (831), in order to be mounted so as not to rotate, are curved at their free end so as to form a tongue suitable for sliding in an axial groove (19) of the housing (2).

6. The transmission according to one of the preceding claims,
**characterized in that** the brake (83) of the or at least one of the clutch plates (81) is formed by a bent and cut blank.

7. The transmission according to one of the preceding claims,
**characterized in that** said clutch plate (81), arranged between the drive wheel (5) and the part (82), is mounted axially movably towards and away from the drive wheel (5) and is arranged, in the activated state of the clutch mechanism (8), engaged with the part (82) borne by, and secured in rotation with, the shaft (6) or the shaft section (6A; 6B) and, in the deactivated state, uncoupled from the part (82) borne by, and secured in rotation with, the shaft (6) or the shaft section (6A; 6B).

8. The transmission according to one of the preceding claims,
**characterized in that** the clutch plate (81) and the part (82) of the or at least one of the clutch mechanisms (8) of the drive wheel (5) are provided, on at least one of their faces, with ramps, the ramps (18) of one face of the plate (81) cooperating, during the activation phase, with the ramps (20) of a face of the drive wheel (5) for an axial movement of the clutch plate (81) in a first direction away from the drive wheel (5) and to secure the clutch plate (81) with the part (82) borne by, and secured in rotation with, the shaft (6) or the shaft section (6A, 6B), the ramps (21) of the other face of the plate (81) cooperating, during the deactivation phase, with the ramps (22) of a face of the part (82) borne by, and secured in rotation with, the shaft (6) or the shaft section (6A, 6B) so as to cause the shaft (6) or the shaft sections (6A, 6B) to freewheel by axially moving said clutch plate (81) in the opposite direction.

9. The transmission according to one of the preceding claims,
**characterized in that** the transmission comprises motor drive means (3) for driving the drive wheel (5), said motor drive means (3) comprising a motor (31) equipped with a drive shaft (32), said drive shaft (32) extending parallel to the longitudinal axis of the shaft (6) or each of the shaft sections (6A, 6B).

10. The transmission according to claim 9,
**characterized in that** the motor drive means (3) further comprise a gear mechanism (14) arranged between the drive shaft (32) and the drive wheel (5), this gear mechanism (14), with which the drive wheel (5) is continuously engaged by meshing, comprising a plurality of pinions (141) each mounted rotating about an axis extending parallel to the drive shaft (32) and to the shaft (6) or each of the shaft sections (6A, 6B).

11. The transmission according to claim 10, of the type wherein the shaft (6), the drive wheel (5) and each clutch mechanism (8) are housed at least partially inside a housing (2),
**characterized in that** the motor drive means (3) for driving the rotation of the toothed wheel (5) comprise, arranged between the gear mechanism (14) and the drive shaft (32), an epicyclic gear train (11) comprising a planet carrier (110) to which the rotational movement of the drive shaft (32) can be transmitted, the planet carrier (110) of the epicyclic gear train being mounted secured in rotation with a pinion (141) of the gear mechanism (14), this pinion (141) and the planet carrier (110) forming a rotary assembly that is borne, and guided in rotation, inside the housing (2), by a mechanical bearing (12), this bearing (12) comprising an inner ring (121) inside which said assembly is housed at least partially, and an outer ring (122) surrounding the inner ring (121), said inner (121) and outer (122) rings being coaxial rings mounted freely rotating with respect to one another, the outer ring (122) being mounted fixed inside the housing (2).

12. The transmission according to one of the preceding claims, of the type whereof the shaft (6), the drive wheel (5) and each clutch mechanism (8) are housed at least partially inside a housing (2),
**characterized in that** the housing (2) has at least two housing elements (9) able to be assembled by a junction plane (10) and **in that** the drive wheel shaft (6) or each of the drive wheel shaft sections (6A; 6B) extends transversely, preferably orthogonally, to said junction plane (10) in the assembled state of the two housing elements (9).

13. The transmission according to claim 12,
**characterized in that** said housing (2), which has at least two housing elements (9) that can be assembled by a junction plane (10) and that, in the assembled state, delimit a cavity (13), comprises means (15) for sealing said cavity (13) extending at the junction plane (10) while surrounding said cavity (13) and means (17) for keeping the housing elements (9) pressed against one another by snapping-fastening.

14. A self-propelled wheeled vehicle (1) that requires a driver, preferably walking, such as a lawn mower,
**characterized in that** it is equipped with a transmission according to one of claims 1 to 13 and **in that** the shaft (6) of the transmission is a drive shaft of the wheels (7A, 7B) of said vehicle (1).
